# EUROPÄISCHE PATENTSCHRIFT

(11) **EP 3 542 528 B1**
(45) Veröffentlichungstag und Bekanntmachung des Hinweises auf die Patenterteilung: **20.07.2022**
(21) Anmeldenummer: 16805332.0
(22) Anmeldetag: 21.11.2016
(51) Int. Cl.: G08B 13/196, H04N 7/18

(54) **ANZEIGEVORRICHTUNG FÜR EINE ÜBERWACHUNGSANLAGE EINES ÜBERWACHUNGSBEREICHS**
DISPLAY APPARATUS FOR A MONITORING INSTALLATION OF A MONITORING AREA
DISPOSITIF D'AFFICHAGE POUR UNE INSTALLATION DE SURVEILLANCE D'UNE ZONE DE SURVEILLANCE

(43) Veröffentlichungstag der Anmeldung: 25.09.2019
(73) Patentinhaber: Robert Bosch GmbH, 70442 Stuttgart (DE)
(72) Erfinder: NADENAU, Marcus, 85598 Baldham (DE); STANGL, Tobias, 83059 Kolbermoor (DE)
(86) Internationale Anmeldenummer: PCT/EP2016/078280
(87) Internationale Veröffentlichungsnummer: WO 2018/091114

(56) Entgegenhaltungen:
- WO-A1-2016/018796
- DE-A1-102012 211 298
- DE-A1-102012 222 661
- US-A1- 2005 207 487

## Beschreibung

### Stand der Technik

Die Erfindung betrifft eine Anzeigevorrichtung für eine Überwachungsanlage eines Überwachungsbereichs, wobei die Überwachungsanlage eine Mehrzahl an Sensoren und Videokameras aufweist, wobei die Sensoren und die Videokameras jeweils einen Abschnitt des Überwachungsbereichs überwachen, wobei die Sensoren Sensordaten bereitstellen und die Videokameras Videodaten bereitstellen, mit mindestens einer Eingangsschnittstelle zur Übernahme der Sensordaten und der Videodaten. Die Anzeigevorrichtung umfasst ferner eine Anzeigeeinrichtung.

Die Überwachung von Überwachungsbereichen, beispielsweise von Gebäuden und/oder von Freiflächen, erfolgt häufig mittels Videokameras und/oder mittels Sensoren, die im Überwachungsbereich angeordnet sind. Das Bildmaterial und/oder die Sensordaten werden dabei häufig in einem Kontrollraum von Sicherheitspersonal gesichtet und bewertet.

Die Druckschrift DE 10 2012 217 152 A1 betrifft eine Benutzerschnittstellenanordnung zum Anzeigen und/oder Abspielen von Videosequenzen. Die Videosequenzen zeigen jeweils ein Ereignis an und sind in einem Überwachungszeitraum aufgenommen. Die Benutzerschnittstellenanordnung weist eine Steuereinrichtung und einen Bildschirm auf, wobei die Steuereinrichtung den Bildschirm zur Ausgabe einer Anzeige ansteuert. Diese umfasst einen Zeitstrahl, der den Überwachungszeitraum oder einen Teil des Überwachungszeitraums angibt.

In der Druckschrift DE 10 2012 211 298 A1 ist eine Anzeigevorrichtung für ein Videoüberwachungssystem offenbart. Das Videoüberwachungssystem umfasst eine Mehrzahl an Überwachungskameras zur Überwachung eines Überwachungsbereichs. Mittels einer Benutzerauswahl in einem angezeigten Modell wird eine der Videokameras ausgewählt.

Die Druckschrift WO 2016/018796 A1, die den nächstkommenden Stand der Technik bildet, betrifft ein System und ein Verfahren zur Generierung und Präsentation eines Zusammenfassungsvideos (Synopsis-Video), dass eine zeitgeraffte Zusammenfassung eines Überwachungsvideos bildet. Das Zusammenfassungsvideo, kann ein Benutzer von einem Backend-System anfordern und sich auf einer Anzeige anzeigen lassen.

### Offenbarung der Erfindung

Im Rahmen der Erfindung wird eine Anzeigevorrichtung für eine Überwachungsanlage eines Überwachungsbereichs mit den Merkmalen des Anspruchs 1 vorgeschlagen. Bevorzugte und/oder vorteilhafte Ausführungsformen der Erfindung ergeben sich aus den Unteransprüchen, der nachfolgenden Beschreibung sowie den beigefügten Figuren.

Erfindungsgemäß wird eine Anzeigevorrichtung für eine Überwachungsanlage eines Überwachungsbereichs vorgeschlagen. Die Anzeigevorrichtung ist vorzugsweise ein Computerarbeitsplatz und/oder Teil eines Computerarbeitsplatzes. Die Anzeigevorrichtung ist eine zentrale und/oder stationäre Anzeigevorrichtung, wie beispielsweise eine Anzeigevorrichtung in einem Kontroll- und/oder Überwachungszentrum. Alternativ und/oder ergänzend ist die Anzeigevorrichtung eine mobile Anzeigevorrichtung, welche beispielsweise von einem Benutzer der Anzeigevorrichtung, beispielsweise einem Sicherheitspersonal und/oder Wachmann, bei sich getragen werden kann. Vorzugsweise ist die Anzeigevorrichtung zur Anzeige von Daten für Sicherheitspersonal und/oder anderweitige Benutzer ausgebildet. Beispielsweise ist die Anzeigevorrichtung ein Smartphone, ein Tablet oder ein Phablet. Insbesondere ist die Anzeigevorrichtung ausgebildet, eine Überwachung und/oder Auswertung von Daten durch das Sicherheitspersonal zu ermöglichen und/oder einen Überwachungsbereich sensorisch, optisch und/oder akustisch zu überwachen.

Die Überwachungsanlage umfasst eine Mehrzahl an Sensoren und eine Mehrzahl an Videokameras. Insbesondere umfasst die Überwachungsanlage mehr als fünf Sensoren und/oder Videokameras, vorzugsweise mehr als hundert Sensoren und/oder Videokameras und im Speziellen mehr als tausend Sensoren und/oder Videokameras. Die Sensoren und/oder Videokameras sind im Überwachungsbereich vorzugsweise ortsfest angeordnet, insbesondere mit einem festen und/oder schwenkbaren Aufnahmebereich und/oder Überwachungsbereich. Alternativ und/oder ergänzend sind die Sensoren und/oder die Videokameras mobil im Überwachungsbereich, wobei deren Position und/oder Aufnahmebereich veränderbar ist. Die Sensoren und die Videokameras sind ausgebildet, jeweils einen Abschnitt des Überwachungsbereiches zu überwachen und/oder sensortechnisch zu erfassen. Die Abschnitte zur Erfassung durch die Sensoren und/oder die Videokameras sind vorzugsweise teilweise überlappend, insbesondere mindestens paarweise überlappend. Alternativ und/oder ergänzend sind die Abschnitte zur sensorischen und/oder videotechnischen Überwachung nicht überlappend. Die Sensoren sind ausgebildet, die Daten, die sie bei der Überwachung des Abschnitts des Überwachungsbereiches erfassen, als Sensordaten bereitzustellen. Die Videokameras sind ausgebildet, die Bilder und/oder Videos der Überwachung des jeweiligen Abschnitts des Überwachungsbereiches als Videodaten bereitzustellen. Die Sensordaten und die Videodaten umfassen vorzugsweise Header-Dateien, wobei die Header-Dateien Informationen zum Aufnahmezeitpunkt und/oder zum Aufnahmeort umfassen. Insbesondere sind die Videokameras und die Sensoren ausgebildet, die Sensordaten und die Videodaten in Realtime bereitzustellen und/oder die Videodaten und Sensordaten auf einer Speichereinheit zu sichern. Die Videokameras sind vorzugsweise Farbkameras, insbesondere sind die Videokameras vorzugsweise CMOS- und/oder CCD-Kameras. Die Videokameras sind beispielsweise als PTZ-Kameras ausgebildet. Die Sensoren im Überwachungsbereich können identischen Typs sein, alternativ und/oder ergänzend sind die Sensoren im Überwachungsbereich teilweise unterschiedlichen Typs. Beispiele für Sensoren sind Brandmelder, Rauchmelder, Feuerdetektoren, Einbruchsdetektoren, Zutrittsdetektoren, Personenzähl- und/oder Erfassungssensoren und/oder Temperatursensoren. Ferner sind Beispiele für Sensoren Systeme die Informationen und/oder Daten als Sensordaten bereitstellen können, wie beispielsweise Fluginformationssysteme, Passagierinformationssysteme, soziale Netzwerke und/oder Wetterdienste.

Die Anzeigevorrichtung umfasst eine Eingangsschnittstelle zur Übernahme der Sensordaten und der Videodaten. Die Eingangsschnittstelle ist vorzugsweise als eine Funkschnittstelle ausgebildet, wobei die Funkschnittstelle beispielsweise mit den Sensoren und den Videokameras datentechnisch koppelbar ist, wobei durch die datentechnische Kopplung die Sensordaten und/oder Videodaten übernommen werden. Alternativ und/oder ergänzend ist die Eingangsschnittstelle als eine Kabelschnittstelle ausgebildet, wobei über eine kabeltechnische Verbindung der Eingangsschnittstelle mit den Sensoren und/oder den Videokameras die Sensordaten und/oder Videodaten übernommen werden.

Die Anzeigevorrichtung umfasst eine Anzeigeeinrichtung. Die Anzeigeeinrichtung ist vorzugsweise als ein Bildschirm zur Anzeige von Daten ausgebildet. Insbesondere ist die Anzeigeeinrichtung zur grafischen und/oder alphanummerischen Anzeige von Daten ausgebildet. Die Anzeigevorrichtung ist vorzugsweise als ein Touchscreen ausgebildet, wobei mittels des Touchscreen die Anzeigeeinrichtung zur Interaktion mit dem Benutzer der Anzeigevorrichtung ausgebildet ist. Insbesondere umfasst die Anzeigeeinrichtung mehrere Anzeigefenster, wobei die Anzeigefenster ausgebildet sind, jeweils Sensordaten und/oder Videodaten anzuzeigen. Beispielsweise zeigen zwei unterschiedliche Fenster der Anzeigeeinrichtung zwei unterschiedliche Videodaten von zwei unterschiedlichen Videokameras im Überwachungsbereich.

Die Anzeigevorrichtung umfasst eine Datenkombinationseinheit. Die Datenkombinationseinheit ist ausgebildet, die Videodaten und die Sensordaten, welche zum selben Aufnahmezeitpunkt aufgenommen wurden, zu Kombinationsdaten zusammenzufassen. Insbesondere ist die Datenkombinationseinheit ausgebildet, die Videodaten und die Sensordaten zu Kombinationsdaten zusammenzufassen, die in einem gemeinsamen Zeitfenster aufgenommen wurden, beispielsweise mit einem Versatz von weniger als vier Sekunden. Vorzugsweise ist die Datenkombinationseinheit ausgebildet, die Videodaten und die Sensordaten zu Kombinationsdaten zusammenzufassen, die einen gleichen Aufnahmezeitpunkt aufweisen und die einen gleichen Abschnitt des Überwachungsbereiches überwachen. Alternativ und/oder ergänzend umfassen die Kombinationsdaten die Videodaten und die Sensordaten, die in benachbarten und/oder angrenzenden Abschnitten des Überwachungsbereiches aufgenommen wurden.

Der Überwachungsbereich ist vorzugsweise ein öffentlicher Bereich, alternativ und/oder ergänzend kann der Überwachungsbereich ein nicht öffentlicher Bereich sein. Insbesondere ist der Überwachungsbereich eine Freifläche, wie beispielsweise ein Park und/oder ein geschlossener Bereich, wie beispielsweise ein Gebäude. Vorzugsweise ist der Überwachungsbereich eine Fabrikhalle, eine Schule, eine Universität, ein Flughafen, ein Bahnhof, ein Zollbereich und/oder eine beliebige Mehrzahl von zusammenhängenden und/oder nicht zusammenhängenden Räumen und/oder Bereichen. Der Überwachungsbereich kann ein zusammenhängender oder ein fragmentierter Überwachungsbereich sein, bei dem beispielsweise Bereiche und/oder Abschnitte aus der Überwachung ausgenommen sind.

Die Anzeigevorrichtung umfasst ein Zeitauswahlmodul, wobei das Zeitauswahlmodul ausgebildet ist, einen frei wählbaren Zeitpunkt als einen ausgewählten Zeitpunkt interaktiv auszuwählen. Insbesondere ist der frei wählbare Zeitpunkt ein Zeitpunkt in der Vergangenheit, der aktuelle Zeitpunkt und/oder ein Zeitpunkt in der Zukunft. Der ausgewählte Zeitpunkt ist insbesondere nummerisch auswählbar, beispielsweise durch Eingabe des entsprechenden Zeitpunkts. Alternativ und/oder ergänzend ist der frei wählbare Zeitpunkt durch Klicken und/oder grafisch auswählbar, beispielsweise durch Auswahl auf einem Zeitstrahl, einer Zeitanzeige und/oder einem Uhr- und/oder Kalenderblatt. Insbesondere ist das Zeitauswahlmodul ausgebildet, ein Zeitintervall als einen ausgewählten Zeitpunkt auszuwählen. Insbesondere ist das Zeitauswahlmodul ausgebildet, einen frei wählbaren Zeitpunkt durch einen Benutzer der Anzeigevorrichtung als ausgewählten Zeitpunkt interaktiv auswählbar zu machen.

Die Anzeigeeinrichtung ist ausgebildet, die Kombinationsdaten zu dem ausgewählten Zeitpunkt anzuzeigen. Insbesondere ist das Zeitauswahlmodul ausgebildet, den ausgewählten Zeitpunkt der Anzeigeeinrichtung bereitzustellen. Alternativ und/oder ergänzend ist die Anzeigeeinrichtung ausgebildet, die Kombinationsdaten des ausgewählten Zeitintervalls anzuzeigen. Vorzugsweise ist die Anzeigeeinrichtung ausgebildet, die Kombinationsdaten zu dem ausgewählten Zeitpunkt und zu einem ausgewählten Abschnitt des Überwachungsbereiches anzuzeigen.

Der Erfindung liegt die Überlegung zugrunde, eine Anzeigevorrichtung mit verbesserten Anzeigeoptionen bereitzustellen. Insbesondere ist es eine Überlegung, die Auswahl und Anzeige von Video- und/oder Sensordaten auf einer Anzeigevorrichtung in einem Kontrollraum dadurch zu verbessern, dass die Videodaten und Sensordaten für jeden Zeitpunkt kombiniert sind, sodass das Sicherheitspersonal durch Rückspulen oder Vorspulen in der Zeit einen jeweils aktuellen Stand einer Situation im Überwachungsbereich erhält, wobei die Videodaten und die Sensordaten des jeweiligen Zeitpunkts synchronisiert angezeigt werden. Dadurch erhält das Personal in dem Kontrollraum einen kompletten Überblick über eine Situation und/oder ein Ereignis in dem Überwachungsbereich. Ein manuelles Heraussuchen von Daten, die zu einem Aufnahmezeitpunkt in einem Video gehören, insbesondere das Heraussuchen in einem Logbuch, kann dadurch entfallen.

In einer möglichen Ausgestaltung der Erfindung ist die Datenkombinationseinheit ausgebildet, die Videodaten und die Sensordaten eines gemeinsamen Ereignisses zu einem Ereignisdatensatz zusammenzufassen. Insbesondere ist die Datenkombinationseinheit ausgebildet, einen Teil der Kombinationsdaten, einen Teil der Videodaten und/oder einen Teil der Sensordaten eines gemeinsamen Ereignisses zu einem Ereignisdatensatz zusammenzufassen. Als ein Ereignis wird vorzugsweise eine Szene und/oder ein Vorfall in einem Abschnitt des Überwachungsbereiches und/oder in mehreren Abschnitten des Überwachungsbereiches verstanden. Insbesondere handelt es sich bei einem Ereignis um ein sicherheitsrelevantes Ereignis. Vorzugsweise ist ein Ereignis ein Vorfall in dem Überwachungsbereich, der eine Bewertung und/oder eine Interaktion des Benutzers der Anzeigevorrichtung und/oder des Überwachungs- und/oder Kontrollpersonals benötigt.

Ein Ereignis weist insbesondere einen Ereignisort, einen Ereigniszeitpunkt und/oder ein Ereigniszeitintervall auf. Insbesondere umfasst der Ereignisdatensatz den Ereigniszeitpunkt, den Ereignisort, den Typ des Ereignisses und/oder Details zu dem Ereignis. Beispielsweise handelt es sich bei einem Ereignis um einen Brand im Überwachungsbereich, wobei der Ereignisdatensatz den Ort, beispielsweise die Raumnummer, den Zeitpunkt, den Ereignistyp Brand, sowie die Sensor- und Videodaten des entsprechenden Abschnitts im Überwachungsbereich umfasst. Weitere Beispiele für Ereignisse sind Einbrüche in einem Abschnitt des Überwachungsbereichs oder unerlaubter Zutritt in einen nicht öffentlichen Bereich. Insbesondere umfasst der Ereignisdatensatz die Daten, die zur Bewertung und/oder Auswertung des Ereignisses dem Benutzer der Anzeigevorrichtung und/oder dem Kontroll- und/oder Sicherheitspersonal bereitgestellt werden müssen. Insbesondere umfassen die Kombinationsdaten den Ereignisdatensatz. Ferner ist es möglich, dass ein Ereignis von einem Benutzer der Anzeigevorrichtung manuell eingegeben und/oder angelegt wird, wobei diesem manuell angelegten Ereignis automatisch und/oder manuell ein Ereignisdatensatz zuordenbar ist.

In einer besonders bevorzugten Ausgestaltung der Erfindung umfasst die Anzeigevorrichtung eine Filtereinrichtung. Die Filtereinrichtung ist insbesondere ausgebildet, die Sensordaten, die Videodaten und/oder die Kombinationsdaten für ein Ereignis in einen gefilterten Ereignisdatensatz zu filtern. Die Filterung erfolgt dabei so, dass der gefilterte Ereignisdatensatz die Teile des Ereignisdatensatzes, der Videodaten und/oder der Sensordaten umfasst, die zur Auswertung durch das Sicherheitspersonal und/oder zur Charakterisierung des Ereignisses benötigt werden. Beispielsweise erfolgt die Filterung für ein Ereignis eines Brandes so, dass nur die Videodaten, die Sensordaten und die Ereignisdaten aus dem jeweiligen Abschnitt, in dem der Brand vorliegt, angezeigt werden. Ferner ist es möglich, dass Sensordaten, die nicht zur Charakterisierung des Ereignisses benötigt werden, herausgefiltert werden, beispielsweise wird für das Vorliegen eines Brandes eine Detektion von zerberstenden Fenstern in diesem Bereich unterdrückt und/oder herausfiltert. Dieser Ausgestaltung liegt die Überlegung zugrunde, dass durch diese Filterung einem Benutzer der Anzeigevorrichtung nur die Informationen gezeigt werden, die zur Bewertung des Ereignisses benötigt werden, und insbesondere nur die Informationen zu dem jeweiligen Zeitpunkt angezeigt werden. Somit kann vermieden werden, dass ein Benutzer der Anzeigevorrichtung von einer Datenflut von den eigentlich wichtigen Daten abgelenkt wird.

Gemäß der Erfindung umfasst die Anzeigevorrichtung ein Modellmodul und ein Ortsauswahlmodul. Das Modellmodul umfasst ein Modell des Überwachungsbereiches, wobei das Modell des Überwachungsbereiches auf der Anzeigeeinrichtung anzeigbar ist. Das Modell des Überwachungsbereiches ist insbesondere ein 2D-, ein 21/2D- oder ein 3D-Modell des Überwachungsbereichs. Das Modell des Überwachungsbereiches ist insbesondere ein virtuelles und/oder ein maßstabgetreues Modell des Überwachungsbereichs. Das Modell des Überwachungsbereichs kann als ein virtueller Atlas des Überwachungsbereichs verstanden werden, wobei der Atlas beispielsweise mehrere Karten umfasst, wobei die Karten vorzugsweise einen Überlapp aufweisen. Das Modell des Überwachungsbereiches ist insbesondere ein zusammenhängendes Modell des Überwachungsbereichs. Vorzugsweise umfasst das Modell des Überwachungsbereichs Strukturelemente. Strukturelemente im Modell sind beispielsweise Böden, Wände, Fenster, Türöffner und/oder feststehende Objekte, wie beispielsweise Möbel. Insbesondere ist es möglich, dass das Modell des Überwachungsbereiches Sicht- und/oder Aufnahmerichtungen der Videokameras und/oder der Sensoren umfasst.

Das Ortsauswahlmodul ist ausgebildet, einen frei wählbaren Ort in dem angezeigten Modell als einen ausgewählten Ort interaktiv auszuwählen. Beispielsweise umfasst dabei die Anzeigevorrichtung und/oder die Anzeigeeinrichtung Eingabemittel, wie beispielsweise eine Computermaus, einen Touchscreen, ein Touchpad oder eine Computertastatur, auf welcher ein Nutzer und/oder das Sicherheitspersonal den Ort als den ausgewählten Ort auswählen kann. Beispielsweise erfolgt die Auswahl des ausgewählten Ortes durch Eingabe, insbesondere alphanummerische Eingabe, der Koordinaten des ausgewählten Ortes. Alternativ und/oder ergänzend kann ein Ort durch Berühren mit den Fingern und/oder der Computermaus an der grafischen Anzeige des Modells ausgewählt werden. Die Anzeigeeinrichtung ist dabei ausgebildet, die Kombinationsdaten für den jeweils ausgewählten Zeitpunkt und den ausgewählten Ort anzuzeigen. Beispielsweise ist es möglich, für den ausgewählten Zeitpunkt als einen ausgewählten Ort einem bestimmten Raum, beispielsweise Raum 1234, zu wählen, sodass die angezeigten Kombinationsdaten auf der Anzeigeeinrichtung nur und/oder weitestgehend nur Sensordaten und Videodaten des entsprechend ausgewählten Ortes zu dem ausgewählten Zeitpunkt umfassen. Dieser Ausgestaltung liegt die Überlegung zugrunde, dass ein Benutzer neben der frei wählbaren Zeit und/oder dem frei wählbaren Zeitpunkt auch den Ort der sensorischen und/oder videotechnischen Überwachung auswählen kann, sodass die Anzeige weiter fokussierend auf die eigentliche Aufgabe des Benutzers einstellbar ist.

In einer möglichen Ausgestaltung der Erfindung umfasst die Anzeigeeinheit einen Zeitstrahl, wobei der Zeitstrahl mindestens einen Teil eines Überwachungszeitraums umfasst, wobei der ausgewählte Zeitpunkt auf dem Zeitstrahl auswählbar ist. Insbesondere ist der Zeitstrahl ausgebildet, einen Zeitraum und/oder Zeitpunkte optisch abzubilden und/oder zu visualisieren. Beispielsweise umfasst der Zeitstrahl Angaben zum Jahr, Monat, Datum und/oder der Uhrzeit der jeweiligen Aufnahme der Sensordaten und/oder Videodaten. Vorzugsweise umfasst die Anzeigevorrichtung und/oder Anzeigeeinrichtung dazu Eingabemittel, sodass ein Benutzer der Anzeigevorrichtung mittels der Eingabemittel den ausgewählten Zeitpunkt auf dem Zeitstrahl auswählen kann. Die Eingabemittel sind dabei beispielsweise eine Computermaus, eine Computertastatur oder ein Touchscreen. Dieser Ausgestaltung liegt die Überlegung zugrunde, eine einfachere Steuerung zur Auswahl des Zeitpunktes dem Benutzer bereitzustellen, sodass dieser eine optische Visualisierung der Zeitpunkte zur Auswahl des Zeitpunktes nutzen kann.

In einer möglichen Ausgestaltung der Erfindung umfasst der Zeitstrahl mindestens eine Markierung, wobei die Markierung zur Einordnung eines Zeitpunktes und/oder einer Zeitdauer ausgebildet ist. Vorzugsweise sind die Markierungen äquidistante Markierungen, beispielsweise Markierungen in einem Minuten- und/oder Sekundenabstand. Die Markierungen sind vorzugsweise als Punkte und/oder Striche auf dem optischen Zeitstrahl ausgebildet.

In einer möglichen weiteren Ausgestaltung der Erfindung sind die Markierungen ausgebildet, ein Ereignis auf dem Zeitstrahl zu markieren, wobei zum Beispiel durch Auswahl dieser Markierung der Ereigniszeitpunkt als ausgewählter Zeitpunkt ausgewählt ist. Beispielsweise ist es somit möglich, dass die Länge eines Ereignisses entlang des Zeitstrahles optisch markierbar ist. Dabei wird insbesondere der Eintritt des Ereignisses und der Endzeitpunkt des Ereignisses optisch markiert, wobei der Bereich und/oder das Intervall zwischen Anfang- und Endzeitpunkt des Ereignisses optisch markierbar ist, beispielsweise durch Schraffierung. Insbesondere sind die Markierungen von einem Benutzer setztbar, beispielsweise kann der Benutzer so Ereignisse und/oder Zeitpunkte Markieren, um diese später einfacher zu finden. Markierte Ereigniszeitpunkte sind vorzugsweise exportierbar, beispielsweise für andere Benutzer anderer Anzeigevorrichtungen. Dieser Ausgestaltung liegt die Überlegung zugrunde, dass ein Benutzer somit visuelle Informationen über die Länge eines Ereignisses direkt erhält und die Auswahl der Bilder und Sensordaten, insbesondere der Kombinationsdaten, für ein Ereignis oder innerhalb eines Ereignisses leichter ansteuern kann.

Besonders bevorzugt ist es, dass die Anzeigevorrichtung ein Interpretationsmodul umfasst, wobei das Interpretationsmodul ausgebildet ist, eine von mindestens einer Videokamera und mindestens einem der Sensoren aufgenommenen Szenen im Überwachungsbereich auf Basis der Sensordaten und/oder der Videodaten zu interpretieren und Interpretationsdaten bereitzustellen. Die Interpretation der Sensordaten und der Videodaten erfolgt vorzugsweise basierend auf Beziehungen zwischen den Sensoren und/oder den Videokameras, wobei die Beziehungen vorzugsweise von dem Interpretationsmodul umfasst sind. Beispielsweise sind Beziehungen zwischen den Sensoren und/oder den Videodaten logische Beziehungen, zeitliche Beziehungen und/oder räumliche Beziehungen. Beispielsweise ist eine räumliche Beziehung der Abstand zwischen zwei Sensoren. Beispielsweise ist das Interpretationsmodul ausgebildet, für ein detektiertes Feuer in einem ersten Abschnitt ein zerberstendes Fenster in dem gleichen Bereich und/oder Raum als eine Folge des Brandes zu interpretieren und das Zerbersten nicht als einen Einbruch zu interpretieren. Die Interpretationsdaten umfassen dann beispielsweise die Information, dass es sich bei dem Ereignis um einen Brand in dem Raum handelt.

Besonders bevorzugt ist es, dass die Anzeigevorrichtung ein Ereignisanlagemodul umfasst. Das Ereignisanlagemodul ist ausgebildet, die Sensordaten und die Videodaten, insbesondere basierend auf den Interpretationsdaten, auf ein Vorliegen eines Ereignisses auszuwerten und für ein detektiertes Ereignis als Ereignisdatensatz bereitzustellen. Insbesondere ist der Ereignisdatensatz Teil der Kombinationsdaten, beispielsweise für den Fall, dass das Ereignis als ein ausgewähltes Ereignis ausgewählt wurde. Beispielsweise umfasst das Ereignisanlagemodul dazu Regeln und/oder ein Regelwerk, welches Sensordaten und/oder Videodaten auswertet und auf das Vorliegen eines Ereignisses prüft. Beispielsweise kann eine Regel lauten, wenn die Temperatur in einem Raum 30 Grad übersteigt und die Videodaten in diesem Bereich ein Flackern mit einer Frequenz größer oder kleiner einer Grenzfrequenz zeigen, dann detektiere oder lege das Ereignis Brand in diesem Bereich mit Ereignisdatensatz an. Dieser Ausgestaltung liegt die Überlegung zugrunde, dass die Anzeigevorrichtung sicherheitsrelevante Ereignisse und/oder Ereignisse im Überwachungsbereich selbstständig erkennen und erfassen kann und so Ereignisdatensätze anlegt, sodass der Benutzer leicht und einfach auf diesen Ereignisdatensatz und den dazugehörigen Sensordaten, Videodaten und Kombinationsdaten zugreifen kann.

In einer Ausgestaltung der Erfindung umfasst die Anzeigevorrichtung ein Aggregationsmodul. Das Aggregationsmodul ist ausgebildet, zwei Ereignisse auf einen Zusammenhang zu prüfen und/oder zwei Ereignisse mit einem Zusammenhang zu einem zusammengefassten Ereignis zusammenzufassen. Das zusammengefasste Ereignis umfasst einen Ereignisdatensatz. Der Ereignisdatensatz weist insbesondere die Kombinationsdaten, Sensordaten und/oder Videodaten auf, die zur Charakterisierung und/oder Bewertung des zusammengefassten Ereignisses benötigt werden, und stellt insbesondere eine Teilmenge des Ereignisdatensatzes des ersten und des zweiten Ereignisses dar. Beispielsweise ist es möglich, dass das Aggregationsmodul einen durch einen Rauchmelder detektierten Brand in einem Bereich mit einem detektierten zerberstenden Fenster in einen angrenzenden Bereich als ein gemeinsames Ereignis zusammenfasst, wobei das zusammengefasste Ereignis ein Brand in den beiden Bereichen ist. Dieser Ausgestaltung liegt die Überlegung zugrunde, dass das Aggregationsmodul die Datenflut, bestehend aus Sensordaten, Videodaten und Kombinationsdaten, weiter reduzieren kann, sodass zusammengehörige Ereignisse als ein gemeinsames Ereignis auf der Anzeigevorrichtung und/oder der Anzeigeeinrichtung angezeigt werden.

Besonders bevorzugt ist es, dass die Anzeigevorrichtung ein Schätzmodul umfasst. Das Schätzmodul ist ausgebildet, die Sensordaten, die Videodaten und/oder die Kombinationsdaten für einen in der Zukunft liegenden Eventzeitpunkt zu extrapolieren. Insbesondere ist es möglich, dass die Extrapolation der Sensordaten, der Videodaten und/oder der Interpretationsdaten auf den Interpretationsdaten und/oder auf Zusatzinformationen basiert. Die von dem Schätzmodul durchgeführte Extrapolation wird als Extrapolationsdaten bereitgestellt. Die Anzeigeeinrichtung ist ausgebildet, für den in der Zukunft liegenden Eventzeitpunkt als ausgewählten Zeitpunkt die Extrapolationsdaten dieses Zeitpunkts in der Zukunft als Kombinationsdaten anzuzeigen. Beispielsweise ist es möglich, dass das Schätzmodul die Personenzahl in einem Abschnitt des Überwachungsbereiches in der Zukunft darauf extrapoliert, dass dieses die Information nutzt, dass ein Flugzeug mit einer Passagieranzahl zu einem Zeitpunkt in der Zukunft ankommt, sodass zu diesem Ankunftszeitpunkt die Personenzahl in diesem Bereich die Durchschnittspersonenzahl plus die Passagierzahl ist, wobei die Kombinationsdaten diese geschätzte Personenzahl umfasst.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine schematische Ansicht einer Überwachungsanlage mit Anzeigevorrichtung.
Figur 2 eine schematische Ansicht auf eine Anzeigeeinrichtung.

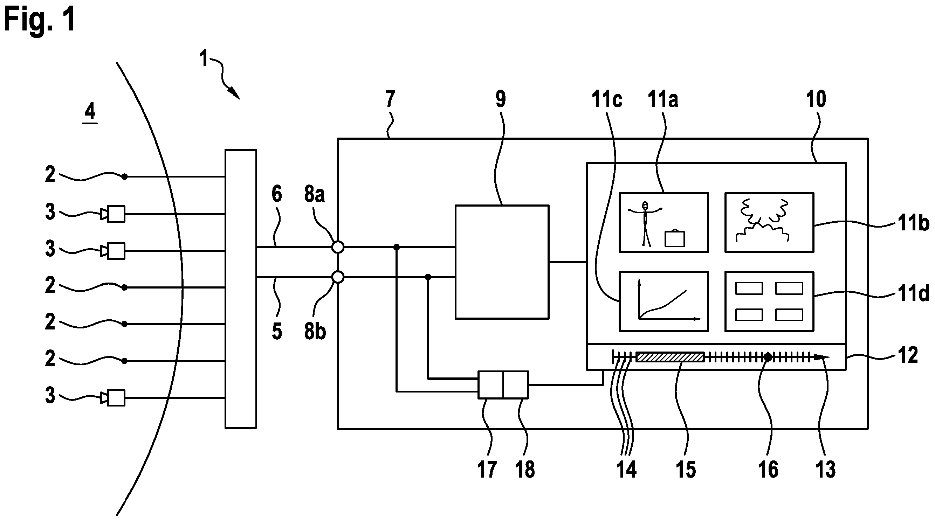

Figur 1 zeigt eine Überwachungsanlage 1, wobei die Überwachungsanlage 1 eine Mehrzahl an Sensoren 2 und Videokameras 3 umfasst. Die Videokameras 3 und Sensoren 2 sind in einem Überwachungsbereich 4 angeordnet. Der Überwachungsbereich 4 ist insbesondere eine Freifläche oder ein Gebäude, wie beispielsweise eine Flughafenanlage. Die Sensoren 2 und Videokameras 3 sind insbesondere regelmäßig und/oder unregelmäßig über den Überwachungsbereich 4 verteilt, wobei die Sensoren 2 und/oder Videokameras 3 jeweils einen Abschnitt des Überwachungsbereichs 4 aufnehmen. Die von den Sensoren 2 und Videokameras 3 aufgenommenen Abschnitte des Überwachungsbereichs 4 sind insbesondere teilweise Überdecken, sodass insbesondere der gesamte Überwachungsbereich 4 sensorisch und/oder videotechnisch überwachbar ist. Die Sensoren 2 und Videokameras 3 sind ausgebildet, die Daten der sensorischen und/oder videotechnischen Überwachung als Sensordaten 5 und Videodaten 6 bereitzustellen.

Die Überwachungsanlage 1 umfasst eine Anzeigevorrichtung 7. Die Anzeigevorrichtung 7 ist insbesondere als ein Computerarbeitsplatz ausgebildet und umfasst einen Monitor und eine Rechnereinheit. Die Anzeigevorrichtung 7 umfasst eine erste Eingangsschnittstelle 8a und eine zweite Eingangsschnittstelle 8b, wobei die Eingangsschnittstelle 8a ausgebildet ist, die Videodaten 6 zu übernehmen und die Eingangsschnittstelle 8b ausgebildet ist, die Sensordaten 5 zu übernehmen. Vorzugsweise sind die Eingangsschnittstellen 8a und 8b als Funkschnittstellen zur funktechnischen Übernahme der Videodaten 6 und Sensordaten 5 ausgebildet.

Die Anzeigevorrichtung 7 umfasst eine Datenkombinationseinheit 9. Die Datenkombinationseinheit 9 ist vorzugsweise softwaretechnisch ausgebildet und zur Ausführung auf einem Prozessor und/oder einem Mikrocontroller ausgebildet. Die Datenkombinationseinheit 9 ist ausgebildet, die Videodaten 6 und die Sensordaten 5 zu Kombinationsdaten zu kombinieren, wobei die Kombination der Sensordaten 5 und Videodaten 6 für den jeweilig gemeinsamen Aufnahmezeitpunkt der Sensordaten 5 und Videodaten 6 erfolgt. Insbesondere werden den Videodaten 6 für den jeweiligen Zeitpunkt die entsprechenden Sensordaten 5 zugeordnet. Die Datenkombinationseinheit 9 ist ausgebildet, die Kombinationsdaten datentechnisch einer Anzeigeeinheit 10 bereitzustellen.

Die Anzeigeeinheit 10 ist insbesondere Teil der Anzeigevorrichtung 7. Die Anzeigeeinheit 10 ist insbesondere ein Monitor, vorzugsweise ein Touchscreen, der die Interaktion eines Benutzers der Anzeigevorrichtung 7 mit der Anzeigevorrichtung 7 ermöglicht. Die Anzeigeeinrichtung 10 weist eine Mehrzahl an Anzeigefenstern 11a, 11b, 11c, 11d auf, wobei die Anzeigefenster 11a, 11b, 11c, 11d zur Anzeige von Daten, insbesondere Videodaten 6 und Sensordaten 5 ausgebildet sind. Beispielsweise ist ein erstes Anzeigefenster 11a ausgebildet, Videodaten 6 einer Videokamera 3 im Überwachungsbereich 4 anzuzeigen. Das Anzeigefenster 11b ist beispielsweise ausgebildet, Bilder, aufgenommen durch eine Videokamera 3, zu demselben Zeitpunkt wie dem Aufnahmezeitpunkt der Videodaten aus 11a als Standbild anzuzeigen. Das Anzeigefenster 11c ist ausgebildet, einen grafischen Verlauf von Sensordaten darzustellen, wobei die grafische Darstellung den Zeitbereich des Aufnahmezeitpunkts der Videodaten aus 11a umfasst. Das Anzeigefenster 11d ist ausgebildet, die Sensordaten, aufgenommen von Sensoren 2 im Überwachungsbereich 4, nummerisch anzuzeigen, wobei die angezeigten Werte den Messwerten der Sensoren zu dem Aufnahmezeitpunkt der Videodaten aus 11a entspricht.

Die Anzeigevorrichtung 7 umfasst ein Zeitauswahlmodul 12, wobei das Zeitauswahlmodul 12 in diesem Ausführungsbeispiel Teil der Anzeigeeinheit 10 ist. Die Anzeigeeinheit 10 zeigt dabei einen Zeitstrahl 13 an, welcher äquidistante Markierungen 14 umfasst, die es ermöglichen, eine Orientierung und Visualisierung von Zeitpunkten und/oder Zeitintervallen auf dem Zeitstrahl 13 zu erlauben. Ferner ist auf dem Zeitstrahl 13 ein Zeitintervall 15 markiert, wobei das Zeitintervall 15 das Zeitintervall 15 eines Ereignisses im Überwachungsbereich 4 andeutet.

Das Zeitauswahlmodul 12 ist ausgebildet, dass ein Benutzer der Anzeigevorrichtung 7 mittels Interaktion einen ausgewählten Zeitpunkt 16 auswählen kann. Insbesondere ist der ausgewählte Zeitpunkt 16 durch Klicken auf den entsprechenden Bereich auf dem Zeitstrahl 13 auswählbar. Der ausgewählte Zeitpunkt 16 ist vorzugsweise frei wählbar innerhalb des Zeitstrahls 13. Die Anzeigeeinrichtung 10 erhält den ausgewählten Zeitpunkt 16, insbesondere erhält sie diesen datentechnisch bereitgestellt. Die Anzeigeeinheit 10 ist ausgebildet, die Kombinationsdaten für den ausgewählten Zeitpunkt 16 darzustellen. Dabei zeigt die Anzeigeeinheit 10 beispielsweise in den Anzeigefenstern 11a - 11d die jeweiligen Daten für den ausgewählten Zeitpunkt 16.

Die Anzeigevorrichtung 7 umfasst ferner ein Ereignisanlagemodul 17 und ein Aggregationsmodul 18. Das Ereignisanlagemodul 17 erhält die Videodaten 6 und die Sensordaten 5 bereitgestellt. Das Ereignisanlagemodul 17 ist ausgebildet, auf Basis der Videodaten 6 und der Sensordaten 5 zu prüfen, ob in dem Überwachungsbereich 4 ein Ereignis, insbesondere ein sicherheitsrelevantes Ereignis, vorliegt. Beispielsweise ist das Ereignisanlagemodul 17 ausgebildet, zu prüfen, ob in dem Überwachungsbereich 4 ein Brand und/oder ein Einbruch als ein sicherheitsrelevantes Ereignis stattfindet.

Das Aggregationsmodul 18 ist ausgebildet, zu prüfen, ob zwei Ereignisse, die beispielsweise durch das Ereignisanlagemodul 17 bestimmt wurden, eine Beziehung aufweisen und/oder zusammengehören. Beispielsweise ist das Aggregationsmodul ausgebildet, zwei detektierte Brände in einem zusammenhängenden Bereich des Überwachungsbereiches als einen gemeinsamen und/oder größeren Brand zusammenzufassen. Das Ereignisanlagemodul 17 und/oder das Aggregationsmodul 18 ist insbesondere datentechnisch mit dem Zeitauswahlmodul 12 verbunden, wobei das Zeitauswahlmodul 12 die von dem Ereignisanlagemodul 17 angelegten Ereignisse und/oder die von dem Aggregationsmodul 18 zusammengefassten Ereignisse auf den Zeitstrahl optisch zu markieren, beispielsweise durch farbliche Hinterlegung des jeweiligen Zeitintervalls und/oder des Zeitpunktes.

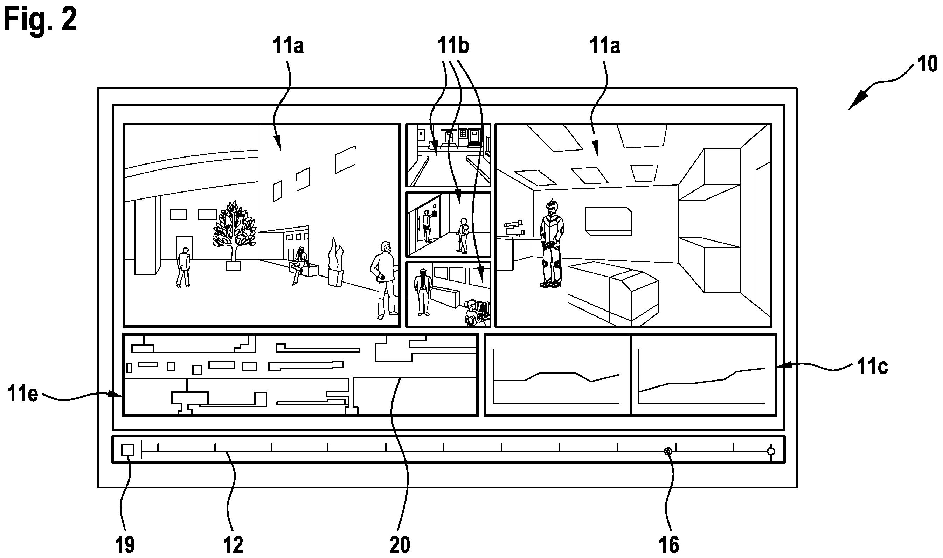

Figur 2 zeigt eine Ansicht auf eine Anzeigeeinrichtung 10. Die Anzeigeeinrichtung 10 zeigt in diesem Beispiel eine Mehrzahl an Anzeigefenstern 11a, 11b, 11c und lle. Ferner weist die Anzeigeeinrichtung 10 einen Zeitstrahl 13 auf.

Der Zeitstrahl 13 umfasst in diesem Ausführungsbeispiel eine Vielzahl an äquidistanten Markierungen 14, wobei die äquidistanten Markierungen 14 beispielsweise eine Minutenabstände darstellen, ferner umfasst der Zeitstrahl 13 weitere Grobmarkierungen, die beispielsweise alle zehn Minuten äquidistant den Zeitstrahl aufteilen. Der Zeitstrahl 13 weist ferner eine Zeitmarkierung auf, die einen ausgewählten Zeitpunkt 16 markiert. Der ausgewählte Zeitpunkt 16 ist der Zeitpunkt, zu dem in den Anzeigefenstern 11a, 11b, 11c, lle die Sensordaten 5, Videodaten 6 und/oder Kombinationsdaten angezeigt werden. Der Zeitstrahl 13 weist ferner eine Interaktionstaste auf, die eine Play- und Pause-Taste 19 darstellt, mittels derer die Darstellung der Sensordaten und/oder Videodaten pausiert werden kann, sodass die Anzeigefenster 11a, 11b, 11c, 11e eingefroren sind. Durch erneute Betätigung der Play-/Pause-Taste 19 kann die Begutachtung der Sensordaten 5, Kombinationsdaten und/oder Videodaten 6 in den Anzeigefenstern 11a, 11b, 11c, 11e fortgesetzt werden.

Die Anzeigefenster 11a zeigen jeweils Videos aus dem Überwachungsbereich 4, wobei die Videos Teil der Kombinationsdaten sind und zu dem ausgewählten Zeitpunkt 16 aufgenommen werden und/oder wurden. Die Anzeige der Videodaten in 11a kann auch weitere Informationen umfassen, wie beispielsweise bereits erkannte Personen und/oder Gegenstände, wobei die Erkennung der weiteren Gegenstände softwaretechnisch durch die Anzeigevorrichtung 7 erfolgen kann. Die Anzeigefenster 11b zeigen Standbilder an, die von den Videokameras 3 im Überwachungsbereich 4 aufgenommen wurden. Beispielsweise ist die Anzeigevorrichtung 7 ausgebildet, die Standbilder gegen eine Anzeige von Videos auszutauschen, sobald eine Bewegung in dem jeweiligen Abschnitt des Überwachungsbereichs 4 detektiert wird.

Die Anzeigeeinrichtung 10 umfasst zwei Fenster 11c zur Anzeige von Sensordaten 5, wobei die angezeigten Sensordaten 5 hier grafisch in Form von Diagrammen dargestellt werden. Insbesondere ist in der grafischen Darstellung der Sensordaten 5 der ausgewählte Zeitpunkt 16 grafisch dargestellt.

Die Anzeigeeinrichtung 10 weist ferner ein angezeigtes Modell 20 des Überwachungsbereiches 4 auf. Das Modell 20 des Überwachungsbereiches 4 ist als eine Übersichtskarte des Überwachungsbereiches 4 ausgebildet. Insbesondere ist in das Modell 20 des Überwachungsbereiches 4 die Position der Videokameras 3 und/oder die Positionen der Sensoren 2 eingezeichnet. Ferner kann das Modell 20 weitere Informationen enthalten, wie beispielsweise die Positionen von Wachpersonal im Überwachungsbereich 4. Die Anzeigevorrichtung 0 ist ausgebildet, dass ein Benutzer durch Interaktion mit dem angezeigten Modell 20 einen ausgewählten Ort auswählen kann. Dabei ist die Anzeigeeinrichtung 10 ausgebildet, die Kombinationsdaten für den ausgewählten Ort und den ausgewählten Zeitpunkt anzuzeigen.

## Patentansprüche

1. Anzeigevorrichtung (7) für eine Überwachungsanlage (1) eines Überwachungsbereichs (4),
wobei die Überwachungsanlage (1) eine Mehrzahl an Sensoren (2) und Videokameras (3) aufweist, wobei die Sensoren (2) und Videokameras (3) jeweils einen Abschnitt des Überwachungsbereichs (4) überwachen, wobei die Sensoren (2) Sensordaten (5) bereitstellen und die Videokameras (3) Videodaten (6) bereitstellen,
mit mindestens einer Eingangsschnittstelle (8a, 8b) zur Übernahme der Sensordaten (5) und der Videodaten (6),
mit einer Anzeigeeinrichtung (10),
mit einer Datenkombinationseinheit (9), wobei die Datenkombinationseinheit (9) ausgebildet ist, die Videodaten (6) und die Sensordaten (5) eines gleichen Aufnahmezeitpunkts zu Kombinationsdaten zusammenzufassen,
mit einem Zeitauswahlmodul (12), wobei das Zeitauswahlmodul (12) ausgebildet ist, einen frei wählbaren Zeitpunkt als einen ausgewählten Zeitpunkt (16) interaktiv auszuwählen,
**gekennzeichnet durch** ein Modellmuodul und ein Ortsauswahlmodul, wobei das Modellmodul ein Modell (20) des Überwachungsbereiches (4) zum Anzeigen auf der Anzeigeeinrichtung (10) bereitstellt, wobei das Ortsauswahlmodul ausgebildet ist, einen frei wählbaren Ort in dem angezeigten Modell (20) als einen ausgewählten Ort interaktiv auszuwählen, wobei die Anzeigeeinrichtung (10) ausgebildet ist, die Kombinationsdaten zu dem ausgewählten Ort und zu dem ausgewählten Zeitpunkt (16) anzuzeigen, wobei ein grafischer Verlauf der Sensordaten dargestellt wird.

2. Anzeigevorrichtung (7) nach Anspruch 1, **dadurch gekennzeichnet, dass** die Datenkombinationseinheit (9) ausgebildet ist, die Videodaten (6) und die Sensordaten (5) eines gemeinsamen Ereignisses zu einem Ereignisdatensatz zusammenzufassen, wobei die Kombinationsdaten den Ereignisdatensatz umfassen.

3. Anzeigevorrichtung (7) nach Anspruch 2, **gekennzeichnet durch** eine Filtereinrichtung, wobei die Filtereinrichtung ausgebildet ist, die Sensordaten (5), die Videodaten (6) und/oder die Kombinationsdaten für ein Ereignis in einen gefilterten Ereignisdatensatz zu filtern, wobei der gefilterte Ereignisdatensatz nur für das jeweilige Ereignis relevante und/oder charakterisierende Sensordaten (5) und/oder Videodaten (6) umfasst.

4. Anzeigevorrichtung (7) nach einem der vorherigen Ansprüche, **dadurch gekennzeichnet, dass** die Anzeigeeinheit (10) einen Zeitstrahl (13) umfasst, wobei der Zeitstrahl (13) mindestens einen Teil eines Überwachungszeitraums umfasst, wobei der ausgewählte Zeitpunkt (16) auf den Zeitstrahl auswählbar ist.

5. Anzeigevorrichtung (7) nach einem der vorherigen Ansprüche, **dadurch gekennzeichnet, dass** der Zeitstrahl (13) mindestens eine Markierung (14) umfasst, wobei die Markierung (14) zur Einordnung eines Zeitpunkts, eines Zeitintervalls (15) und/oder einer Zeitdauer ausgebildet ist.

6. Anzeigevorrichtung (7) nach einem der vorherigen Ansprüche, **dadurch gekennzeichnet, dass** die Markierung (14) ausgebildet, ist ein Ereignis auf dem Zeitstrahl (13) zu markieren.

7. Anzeigevorrichtung (7) nach einem der vorherigen Ansprüche, **gekennzeichnet durch** ein Interpretationsmodul (17), wobei das Interpretationsmodul (17) ausgebildet ist, eine von mindestens einer der Videokameras (2) und mindestens einem der Sensoren (2) aufgenommenen Szene im Überwachungsbereich (4) auf Basis der Sensordaten (5) und/oder der Videodaten (6) zu interpretieren und Interpretationsdaten bereitzustellen.

8. Anzeigevorrichtung (7) nach einem der vorherigen Ansprüche, **gekennzeichnet durch** ein Ereignisanlagemodul, wobei das Ereignisanlagemodul ausgebildet ist, die Sensordatendaten (5) und Videodaten (6) auf ein Vorliegen eines Ereignisses auszuwerten und als Ereignisdatensatz bereitzustellen.

9. Anzeigevorrichtung (7) nach Anspruch 8, **gekennzeichnet durch** ein Aggregationsmodul (18), wobei das Aggregationsmodul ausgebildet ist, zwei Ereignisse auf einen Zusammenhang zu prüfen und/oder zwei Ereignisse mit einem Zusammenhangs zu einem zusammengefassten Ereignis mit zusammengefassten Ereignisdatensatz zusammenzufassen.

10. Anzeigevorrichtung (7) nach einem der vorherigen Ansprüche, gekennzeichnet Schätzmodul, wobei das Schätzmodul ausgebildet ist Sensordaten (5), Videodaten (6) und/oder Kombinationsdaten für einen in der Zukunft liegenden Eventzeitpunkt zu extrapolieren und als Extrapolationsdaten bereitzustellen, wobei die Anzeigeeinrichtung (7) ausgebildet ist, für den Eventzeitpunkt als ausgewählten Zeitpunkt (16) die Extrapolationsdaten als Kombinationsdaten anzuzeigen.

## Claims

1. Display device (7) for a monitoring system (1) of a monitoring area (4), wherein the monitoring system (1) has a plurality of sensors (2) and has video cameras (3), wherein the sensors (2) and video cameras (3) each monitor a section of the monitoring area (4), wherein the sensors (2) provide sensor data (5) and the video cameras (3) provide video data (6), with at least one input interface (8a, 8b) for acquiring the sensor data (5) and the video data (6), with a display device (10), with a data combination unit (9), wherein the data combination unit (9) is designed to combine the video data (6) and the sensor data (5) from one and the same time of recording into combination data, with a time selection module (12), wherein the time selection module (12) is designed to interactively select a freely selectable time as a selected time (16), **characterized by** a model module and a location selection module, wherein the model module provides a model (20) of the monitoring area (4) for displaying on the display device (10), wherein the location selection module is designed to interactively select a freely selectable location in the displayed model (20) as a selected location, wherein the display device (10) is designed to display the combination data for the selected location and for the selected time (16), wherein a graphical profile of the sensor data is shown.

2. Display device (7) according to Claim 1, **characterized in that** the data combination unit (9) is designed to combine the video data (6) and the sensor data (5) from a common event into an event data set, the combination data comprising the event data set.

3. Display device (7) according to Claim 2, **characterized by** a filter device, wherein the filter device is designed to filter the sensor data (5), the video data (6) and/or the combination data for an event into a filtered event data set, wherein the filtered event data set comprises only sensor data (5) and/or video data (6) relevant to and/or characterizing the respective event.

4. Display device (7) according to one of the preceding claims, **characterized in that** the display unit (10) comprises a timeline (13), wherein the timeline (13) comprises at least a portion of a monitoring period, wherein the selected time (16) is selectable on the timeline.

5. Display device (7) according to one of the preceding claims, **characterized in that** the timeline (13) comprises at least one marker (14), wherein the marker (14) is designed to classify a point in time, a time range (15) and/or a time duration.

6. Display device (7) according to one of the preceding claims, **characterized in that** the marker (14) is designed to mark an event on the timeline (13).

7. Display device (7) according to one of the preceding claims, **characterized by** an interpretation module (17), wherein the interpretation module (17) is designed to interpret a scene recorded by at least one of the video cameras (2) and at least one of the sensors (2) in the monitoring area (4) based on the sensor data (5) and/or the video data (6) and to provide interpretation data.

8. Display device (7) according to one of the preceding claims, **characterized by** an event creation module, wherein the event creation module is designed to evaluate the sensor data (5) and video data (6) for presence of an event and to provide them as an event data set.

9. Display device (7) according to Claim 8, **characterized by** an aggregation module (18), wherein the aggregation module is designed to check two events for a connection and/or to combine two events with a connection into a combined event with combined event data sets.

10. Display device (7) according to one of the preceding claims, **characterized by** an estimation module, wherein the estimation module is designed to extrapolate sensor data (5), video data (6) and/or combination data for an event time in the future and to provide them as extrapolation data, wherein the display device (7) is designed to display the extrapolation data as combination data for the event time as the selected time (16) .

## Revendications

1. Dispositif d'affichage (7) destiné à un système de surveillance (1) d'une zone de surveillance (4),
le système de surveillance (1) comportant une pluralité de capteurs (2) et de caméras vidéo (3), les capteurs (2) et les caméras vidéo (3) surveillant chacun une portion de la zone de surveillance (4), les capteurs (2) fournissant des données de capteur (5) et les caméras vidéo (3) fournissant des données vidéo (6),
ledit dispositif d'affichage comprenant au moins une interface d'entrée (8a, 8b) destinée à transférer les données de capteur (5) et les données vidéo (6),
une unité d'affichage (10),
une unité de combinaison de données (9), l'unité de combinaison de données (9) étant conçue pour combiner les données vidéo (6) et les données de capteur (5) du même temps d'acquisition pour former des données de combinaison,
un module de sélection d'instant (12), le module de sélection de temps (12) étant conçu pour sélectionner de manière interactive un instant librement sélectionnable comme instant sélectionné (16),
**caractérisé par** un module de modèle et un module de sélection d'emplacement, le module de modèle fournissant un modèle (20) de la zone de surveillance (4) destiné à être affiché sur l'unité d'affichage (10), le module de sélection d'emplacement étant conçu pour sélectionner de manière interactive un emplacement librement sélectionnable dans le modèle affiché (20) comme emplacement sélectionné, l'unité d'affichage (10) étant conçue pour afficher les données de combinaison relatives à l'emplacement sélectionné et à l'instant sélectionné (16), une variation graphique du capteur données étant représentée.

2. Dispositif d'affichage (7) selon la revendication 1, **caractérisé en ce que** l'unité de combinaison de données (9) est conçue pour combiner les données vidéo (6) et les données de capteur (5) d'un événement commun pour former un ensemble de données d'événement, les données de combinaison comprenant l'ensemble de données d'événement.

3. Dispositif d'affichage (7) selon la revendication 2, **caractérisé par** une unité de filtrage, l'unité de filtrage étant conçue pour filtrer les données de capteur (5), les données vidéo (6) et/ou les données de combinaison pour un événement pour obtenir un ensemble de données d'événement filtré, l'ensemble d'événement filtré comprenant des données de capteur (5) et/ou des données vidéo (6) pertinentes et/ou caractéristiques uniquement pour l'événement respectif.

4. Dispositif d'affichage (7) selon l'une des revendications précédentes, **caractérisé en ce que** l'unité d'affichage (10) comprend une frise chronologique (13), la frise chronologique (13) comprenant au moins une partie d'une période de surveillance, l'instant sélectionné (16) pouvant être sélectionné sur la frise chronologique.

5. Dispositif d'affichage (7) selon l'une des revendications précédentes, **caractérisé en ce que** la frise chronologique (13) comporte au moins un marquage (14), le marquage (14) étant conçu pour classer un instant, un intervalle de temps (15) et/ou une période.

6. Dispositif d'affichage (7) selon l'une des revendications précédentes, **caractérisé en ce que** le marquage (14) est destiné à marquer un événement sur la frise chronologique (13).

7. Dispositif d'affichage (7) selon l'une des revendications précédentes, **caractérisé par** un module d'interprétation (17), le module d'interprétation (17) étant conçu pour interpréter sur la base des données de capteur (5) et/ou des données vidéo (6) une scène de la zone de surveillance (4) qui est acquise par au moins une des caméras vidéo (2) et au moins un des capteurs (2) et pour fournir des données d'interprétation.

8. Dispositif d'affichage (7) selon l'une des revendications précédentes, **caractérisé par** un module de système d'événement, le module de système d'événement étant conçu pour évaluer les données de capteur (5) et les données vidéo (6) afin de détecter la présence d'un événement et pour les fournir comme ensemble de données d'événement.

9. Dispositif d'affichage (7) selon la revendication 8, **caractérisé par** un module d'agrégation (18), le module d'agrégation étant conçu pour vérifier deux événements afin de détecter une relation et/ou pour combiner deux événements à une relation afin de former un événement combiné comprenant un ensemble de données d'événement combiné.

10. Dispositif d'affichage (7) selon l'une des revendications précédentes, **caractérisé par** un module d'estimation, le module d'estimation étant conçu pour extrapoler des données de capteur (5), des données vidéo (6) et/ou des données de combinaison pour un instant d'événement futur et pour les fournir comme données d'extrapolation, l'unité d'affichage (7) étant conçue pour afficher les données d'extrapolation comme données de combinaison pour l'instant d'événement comme instant sélectionné (16).
